# NEUE EUROPÄISCHE PATENTSCHRIFT

(11) **EP 1 084 198 B2**
(45) Veröffentlichungstag und Bekanntmachung des Hinweises auf die Entscheidung über den Einspruch: **18.06.2008**
(45) Hinweis auf die Patenterteilung: 24.07.2002
(21) Anmeldenummer: 99932617.6
(22) Anmeldetag: 03.05.1999
(51) Int. Cl.: C09C 3/08, C09C 3/10, C09C 3/12

(54) **MIT REAKTIVEN ORIENTIERUNGSHILFSMITTELN BESCHICHTETE EFFEKTPIGMENTE**
EFFECT PIGMENTS COATED WITH REACTIVE ORIENTATION AUXILIARY AGENTS
PIGMENTS A EFFET RECOUVERTS D'AUXILIAIRES D'ORIENTATION REACTIFS

(30) Priorität: 06.05.1998 DE 19820112
(43) Veröffentlichungstag der Anmeldung: 21.03.2001
(73) Patentinhaber: Eckart GmbH, 90763 Fürth (DE)
(72) Erfinder: GREIWE, Klaus, D-91207 Lauf (DE); KIEHL, Alfried, D-91220 Schnaittach (DE)
(74) Vertreter: LOUIS, PÖHLAU, LOHRENTZ
(86) Internationale Anmeldenummer: PCT/DE1999/001333
(87) Internationale Veröffentlichungsnummer: WO 1999/057204

(56) Entgegenhaltungen:
- EP-A- 0 268 918
- EP-A- 0 406 731
- EP-A- 0 416 395
- EP-A- 0 634 459
- EP-A- 0 679 700
- EP-A- 0 688 833
- WO-A-96/32446
- WO-A-97/12942
- WO-A-98/13426
- US-A- 6 761 762
- Ullmann's Encyclopedia of Industrial Chemistry, 5. Ausgabe, Seiten 243-245,356.
- Holleman-Wiberg, Lehrbuch der anorg.Chemie, 101. Auflage, Seiten 779-781.
- DIN 55944
- Langmuir 2001, 17, 5882-5888, Multilayer Alkoxysilane Silylation of Oxide Surfaces.

## Beschreibung

Die vorliegende Erfindung betrifft Effektpigmente, die Metallpigmente sind, deren Oberfläche mit Orientierungshilfsmitteln modifiziert ist.

In der Literatur (EP 0 634 459 A2) ist die Beschichtung von Perlglanzpigmenten mit Alkylsilanen zur Verbesserung der Orientierung der Pigmente im umgebenden Medium (Lack, Gießharz, etc.) beschrieben. Das dort angewandte Modifizierungsverfahren steuert das Benetzungsverhalten der Perlglanzpigmente durch das Einbringen von hydrophobierenden Alkylsilanen und führt zu einem leafing-Verhalten, wie es auch bei Metalleffektpigmenten bekannt ist.

Durch das Aufbringen von Stearinsäure auf der Pigmentoberfläche können Aluminiumpigmente ebenfalls stark hydrophobiert werden, was dann zu einer schlechteren Benetzung der Pigmente durch die einzelnen Komponenten des Lacks führt. Die Pigmente reichern sich dann an den Grenzflächen (bzw. der Oberfläche) des flüssigen Lackfilms an. Da dies nach der Aushärtung des Lackfilms zu Beschichtungen mit hoher Brillanz führt, spricht man hier von einem guten Orientierungsverhalten der Pigmente ("leafing Effekt"). Die an der Oberfläche orientierten Aluminiumpigmente sind aber nicht besonders bewitterungsbeständig, da sie nicht im Lackfilm eingeschlossen sind und so vor Korrosion geschützt sind. In Automobil-Metallic-Lacken, die besonders hohen Bewitterungsstabilitäten genügen müssen, werden daher nur non-leafing (gut benetzbare) Aluminiumpigmente eingesetzt. Lacke im Automobilbereich weisen einen Schichtaufbau auf, der bei Metalliclackierungen in der Regel aus fünf Schichten besteht. Auf dem metallischen Substrat befindet sich eine Phosphatschicht, gefolgt von einer kathodischen Tauchlackierung (KTL), einer Füllerschicht (Ausgleich von Unebenheiten, etc.), dem Basislack und schließlich dem Klarlack. Die eigentliche effektgebende Schicht ist der Basislack, der in Regel eine Mischung von Metallpigmenten und Perlglanzpigmenten enthält und heute bereits in vielen Fällen als Wasserlack eingestellt wird. Der Klarlack dient zum Schutz des Basislackes und zum "Glätten" der Oberfläche.

Eine wichtige Prüfung der Beständigkeit von Metalliclackierungen ist der sogenannte Schwitzwassertest. Hierbei wird die komplette Beschichtung einer Kondenswasserprüfklimate ausgesetzt (DIN 50 017) und anschließend auf ihre mechanische Festigkeit und Optik geprüft. Im idealen Fall dürfen sich die Eigenschaften der Beschichtung vor und nach dem Test nicht verändern. Im ungünstigeren Fall kommt es zu einem Haftungsverlust zwischen Basislack und Klarlack oder zu einem Haftungsverlust zwischen den Effektpigmenten und dem Basislack. Erkennbar sind solche Veränderungen in der Gitterschnittprüfung oder dem Steinschlagtest. Bei negativem Testergebnis kommt es zur teilweisen Ablösung des Klarlacks vom Basislack oder sogar zum völligen Auseinanderbrechen der Basislackschicht. Darüber hinaus sind unter Umständen auch optische Veränderungen durch die Einwirkung von Wasserdampf auf die Beschichtung zu beobachten (Vergrauung, Quellung, etc.).

Ein Nachteil der Beschichtung von Effektpigmenten mit hydrophobierenden Alkylsilanen (z.B. EP 0 634 459 A2) sind die schwachen Bindungskräfte an der Grenzfläche Pigment/Bindemittel (van der Waals-Kräfte, Wasserstoffbrücken). Aufgrund dieser schwachen Bindungskräfte werden die Pigmente insbesondere in wäßrigen Lacksystemen unvollständig benetzt, was zu einer schlechten Einbindung der Pigmente in die Beschichtung führt. Dadurch wird sowohl die Haftung der Pigmente in der Basislackschicht als auch die Haftung zwischen Basislack und Klarlack verschlechtert. Diese schlechtere Haftung führt dann zu schlechteren Ergebnissen im Schwitzwassertest.

Durch die Diffusion von Wasserdampf durch den Klarlack hindurch in den Basislack wird die Adhäsion zwischen beiden Schichten im Schwitzwassertest stark beeinträchtigt, falls es zur Kondensation von Wasser zwischen Basislack und Klarlack kommt. Das ist insbesondere dann der Fall, wenn die beschichteten Pigmente nicht oder nur schlecht durch die Bindemittel bzw. Lösungsmittel der Farbe oder des Lacks (organisches Lösungsmittel und/oder Wasser) benetzbar sind, weil die Pigmente sich dann an der Oberfläche des Basislacks befinden und direkten Kontakt zum Klarlack haben. In diesem Fall führt die verringerte Kondenswasserbeständigkeit unter Umständen zum völligen Auseinanderbrechen der Lackschichten bei der Einwirkung von Scherkräften (Gitterschnitt, Steinschlagtest, etc.).

Aufgabe der vorliegenden Erfindung ist es daher, Effektpigmente bereitzustellen, die einerseits leicht vom Bindemittel bzw. Lösungsmittel der Farbe oder des Lacks benetzt werden und sich gut im flüssigen Lackfilm orientieren können und andererseits mit der umgebenden Bindemittelmatrix einen innigen Verbund eingehen und daher die vorstehend beschriebenen anwendungstechnischen Nachteile nicht zeigen.

Diese Aufgabe wird durch Bereitstellung eines mit Oberflächenmodifizierungsmitteln beschichteten Effektpigments, das ein Metallpigment ist, gemäß Anspruch 1 sowie durch Bereitstellung von Verfahren gemäß Anspruch 8 und 9 gelöst.

Mindestens eine nach außen, d.h. zum Bindemittel gerichtete funktionelle Gruppe des erfindungsgemäßen Effektpigments, das ein Metallpigment ist, kann dabei mit dem Bindemittel chemisch in einer Art Vernetzungsreaktion reagieren. Aufgrund der resultierenden starken kovalenten Bindungskräfte an der Grenzfläche Pigment/Bindemittel kann Wasserdampf in der fertigen Beschichtung nur noch schwer in die pigmentierte Bindemittelmatrix eindiffundieren. Durch die starke Belegung der Pigmente mit dem Bindemittel des Basislacks, die durch die relativ gute Benetzbarkeit der mit dem reaktiven Orientierungsmittel beschichteten Metallpigmente verursacht wird, kann es nicht zur Kondensation und damit Einlagerung von Wasser zwischen Klarlack und Basislack kommen. Deshalb sind selbst mit Lösungsmittel (z.B. Wasser) gequollene Beschichtungen sehr scherstabil und schlagfest. Ein derart behandeltes Effektpigment ist demnach ein "chemischer Bestandteil" des umgebenden Mediums geworden.

Bei den erfindungsgemäßen Effektpigmenten handelt es sich entweder um Metallpigmente wie Aluminium-, Kupfer-, Zink-, Goldbronze-, Titan-(EP 0 796 688), Zirkonium-, Zinn-, Eisen-(EP 0 673 980), und Stahlpigmente oder um Pigmente aus Legierungen der oben erwähnten Metalle. Die Pigmente können eine Beschichtung aus Metalloxiden wie SiO₂ (z.B: U.S. 2 885 366, U.S. 3.954.496, EP 0 678 561, DE 195 01 307, EP 0 708 155), TiO₂ (z.B.: 0 338 428), Al₂O₃ (z.B: DE 195 20 312, EP 0 560 144) und Fe₂O₃ (z.B.: EP 0 033 457, EP 0 806 457) oder organischen Polymeren wie Acrylat, Methacrylat usw. (z.B.: DE 40 30 727, EP 0 416 369) tragen. Die Teilchengröße liegt zwischen 1 und 200 µm.

Die beschriebenen Anforderungen an ein Orientierungshilfsmittel erfüllt erfindungsgemäß ein Haftvermittler, der zwei oder mehr funktionelle Gruppen trägt. Eine Gruppe des Haftvermittlers reagiert mit der gegebenenfalls mit Oxiden belegten Oberfläche des Effektpigmentes. Hier kommen Alkoxysilylgruppen (z.B. Methoxy-, Ethoxysilane), Halogensilane (z.B. Chlor-) oder saure Gruppen von Phosphorsäureestern- bzw. Phosphonsäuren und Phosphonsäureestern in Betracht. Über einen mehr oder . weniger langen Spacer sind die beschriebenen Gruppen mit einer zweiten, lackfreundlichen Gruppe verknüpft. Bei diesem Spacer handelt es sich um unreaktive Alkylketten, Siloxane, Polyether, Thioether oder Urethane bzw. Kombinationen dieser Gruppierungen der allgemeinen Formel (C,Si)ₙHₘ(N,O,S)ₓ mit n = 1 - 50, m = 2 - 100 und x = 0 - 50. Bei der lackfreundlichen Gruppe handelt es sich vorzugsweise um Acrylate, Methacrylate, Vinylverbindungen, Amino- oder Cyanogruppen, Isocyanate, Epoxy-, Carboxy- oder Hydroxygruppen. Diese Gruppen reagieren beim Einbrennen bzw. Aushärten der Beschichtung mit dem umgebenden Medium chemisch in einer Vernetzungsreaktion nach den bekannten chemischen Reaktionsmechanismen.

Die erfindungsgemäßen Effektpigmente, die Metalleffektpigmente sind, werden hergestellt durch Rühren und Erwärmen der Ausgangspigmente in einem organischen Lösungsmittel, Versetzen mit einer Lösung einer Base in Wasser oder einem anderen Lösungsmittel, Zugeben des Oberflächenmodifizierungsmittels, Abkühlen nach 15 min bis 24 Stunden Reaktionszeit und Absaugen. Der erhaltene Filterkuchen kann bei ca. 60° - 130°C im Vakuum getrocknet werden.

Oberflächenmodifizierungsmittel auf Silanbasis sind beispielsweise in DE 40 11 044 C2 beschrieben. Oberflächenmodifizierungsmittel auf Phosphorsäurebasis sind u. a. als Lubrizol® 2061 und 2063 von der Firma LUBRIZOL (Fa. Langer&Co.) erhältlich.

Das Oberflächenmodifizierungsmittel kann auch durch chemische Reaktion aus geeigneten Ausgangsstoffen direkt auf dem Pigment erzeugt werden. In diesem Fall werden die Effektpigmente, die Metalleffektpigmente sind, ebenfalls in einem organischen Lösungsmittel gerührt und erwärmt. Dann werden sie mit der Lösung einer Base versetzt. Für die mit Wasser reagierenden Metalleffektpigmente werden vorzugsweise organische Amine, für die mineralischen Effektpigmente überwiegend mineralische Basen eingesetzt. Anschließend wird ein Haftvermittler zugeben, der mit den Effektpigmenten chemisch reagiert und fest auf der Pigmentoberfläche angebunden wird. Über eine weitere funktionelle Gruppe wird dieser Haftvermittler anschließend gegebenenfalls in Gegenwart eines Initiators (Radikalbildner, Säuren, Basen, etc.) mit einem Vernetzer umgesetzt, wobei jedoch nur ein Teil der funktionellen Gruppen des Vernetzers mit dem Haftvermittler abreagiert und ein anderer Teil frei, d.h. weiter reaktionsfähig bleibt. Nach ca. 1 - 6 h Reaktionszeit wird die Pigmentsuspension abgekühlt und abgesaugt. Der so erhaltene Filterkuchen kann bei 60° - 130°C im Vakuum getrocknet werden.

Die Reaktion kann auch in einem Lösemittel durchgeführt werden, in dem die beschichteten Effektpigmente, die Metalleffektpigmente sind, später angepastet werden und zum Einsatz gelangen. Ein Trocknungsschritt wird dadurch überflüssig.
Als spezielle Beispiele für Haftvermittler können beispielsweise vernetzbare organofunktionelle Silane aufgeführt werden, die sich nach der Hydrolyse mit ihren reaktiven Si-OH Einheiten auf der (teilweise oxidischen) Oberfläche der Effektpigmente verankern. Die potentiell vernetzbaren organischen Gruppen können später mit den Lackbindemitteln abreagieren. Beispiele für venetzbare organofuktionelle Silane sind:

Vinyltrimethoxysilan, Aminopropyltriethoxysilan, N-Ethylamino-N-propyldimethoxysilan, Isocyanatopropyltriethoxysilan, Mercaptopropyltrimethoxysilan, Vinyltriethoxysilan, Vinylethyldichlorsilan, Vinylmethyldiacetoxysilan, Vinylmethyldichlorsilan, Vinylmethyldiethoxysilan, Vinyltriacetoxysilan, Vinyltrichlorsilan, Phenylvinyldiethoxysilan, Phenylallyldichlorsilan, 3-Isocyanatopropoxyltriethoxysilan, Methacryloxypropenyltrimethoxysilan, 3-Methacryloxypropyltrimethoxysilan, 3-Glycidyloxypropyltrimethoxysilan, 1,2-Epoxy-4-(ethyltriethoxysilyl)-cyclohexan, 3-Acryloxypropyltrimethoxysilan, 2-Methacryloxyethyltrimethoxysilan, 2-Acryloxyethyltrimethoxysilan, 3-Methacryloxypropyltriethoxysilan, 3-Acryloxypropyltrimethoxysilan, 2-Methacryloxyethyltriethoxysilan, 2-Acryloxyethyltriethoxysilan, 3-Methacryloxypropyltris(methoxyethoxy)silan, 3-Methacryloxypropyltris(butoxyethoxy)silan, 3-Methacryloxypropyltris(propoxy)silan, 3-Methacryloxypropyltris(butoxy)silan, 3-Acryloxypropyltris(methoxyethoxy)silan, 3-Acryloxypropyltris(butoxyethoxy)silan, 3-Acryloxypropyltris(propoxy)silan, 3-Acryloxypropyltris(butoxy)silan. Besonders bevorzugt ist 3-Methacryloxypropyltrimethoxysilan.

Diese und weitere Silane sind kommerziell z.B. bei ABCR GmbH & Co., D-76151 Karlsruhe, oder der Firma Sivento Chemie GmbH, D-40468 Düsseldorf, erhältlich.

Auch Vinylphosphonsäure bzw. Vinylphosphonsäurediethylester können als Haftvermittler hier aufgeführt werden (Hersteller: Hoechst AG, Frankfurt am Main).

Werden Acrylat-/Methacrylatsilane als Haftvermittler eingesetzt, können folgende mehrfach funktionellen Acrylate bzw. Methacrylate als Vernetzer eingesetzt werden:

Tetraethylenglycoldiacrylat (TTEGDA), Triethylenglycoldiacrylat (TIEGDA), Polyethylenglycol-400-diacrylat (PEG400DA), 2,2'-Bis(4-acryloxyethoxyphenyl)propan, Ethylenglycoldimethacrylat (EGDMA), Diethylenglycoldimethacrylat (DEGDMA), Triethylenglycoldimethacrylat (TRGDMA), Tetraethylenglycoldimethacrylat (TEGDMA), 1,3-Butandioldimethacrylat (1,3-BDDMA), 1,4-Butandioldimethacrylat (1,4-BDDMA), 1,6-Hexandioldimethacrylat (1,6-HDMA), 1,12-Dodecandioldimethacrylat (1,12-DDDMA), Neopentylglycoldimethacrylat (NPGDMA), Trimethylolpropantrimethacrylat (TMPTMA) und 1,6-Hexandioldiacrylat (1,6-HDDA). Besonders bevorzugt ist Trimetylolpropantrimethacrylat (TMPTMA).

Bei der Verwendung von Epoxysilanen als Haftvermittler können beispielsweise folgende mehrfach funktionellen Amine als Vernetzer eingesetzt werden: 3,3-Dimethyl-4,4-diaminodicyclohexylmethan, Ethylendiamin, Triethylentetramin, meta-Xylylendiamin, N-Aminoethylpiperazin, 2-Methyl-1,5-pentamethylendiamin, 1,2-Diaminocyclohexan, Isophorondiamin.

Werden Aminosilane als Haftvermittler eingesetzt, so können z.B. folgende mehrfach funktionelle Epoxyverbindungen als Vernetzer verwendet werden: 1,4-Butandioldiglycidylether, Glycerintriglycidether, Neopentylglykoldiglycidylether, Pentaerythritpolyglycidether, 1,6-Hexandioldiglycidether, Polypropylenglykoldiglycidylether, Trimethylolpropantriglycidether.

Die genannten Acrylate und Methacrylate sind beispielsweise erhältlich bei der Firma Elf Atochem, D-40401 Düsseldorf, der Firma Röhm, Darmstadt und der Firma Servo, 7490 AA Delden (Niederlande). Alle erwähnten mehrfach funtionellen Amine und Epoxyverbindungen sind kommerziell verfügbar, so z.B. bei der Firma UPPC, D-88487 Mietringen-Baltringen.

Als thermische Initiatoren kommen handelsübliche organische Peroxide, aber auch anorganische Peroxide und Diazoverbindungen in Frage.
Beispiele für solche Peroxide sind Diacetylperoxide wie Acetyl-cyclohexan-sulfonylperoxid, Bis (2,4-dichlorbenzoyl)peroxid, Diisononanoylperoxid, Dioctanoylperoxid, Diacetylperoxid und Dibenzoylperoxid; Peroxy-Dicarbonate (z.B. Diisopropylperoxydicarbonat, Di-nbutylperoxydicarbonat, Di-2-ethylhexyl-peroxydicarbonat, Dicycolhexyl-peroxydicarbonat), Alkylperester (z.B. Cumylperneodecanoat, t-Butyl-perneodecanoat, t-Amyl-perpivalat, t-Butyl-per-2-ethylhexanoat, t-Butylperisobutyrat, t-Butylperbenzoat), Dialkylperoxide (z.B. Dicumylperoxid, t-Butylcumylperoxid, 2,5-Dimethylhexan-2,5-di-t-butylperoxid, Di(t-butylperoxy-isopropyl)benzol, Di-t-butylperoxid oder 2,5-Dimethylhexin-3-2,5-di-t-butylperoxid), Perketale(z.B. 1,1'-Bis(t-butylperoxy)-3,3,5-trimethylcyclohexanonperoxid, Methylisobutylketonperoxid, Methylethylketonperoxid oder Acetylacetonperoxid), Alkylhydroperoxide (z.B. Pinanhydroperoxid, Cumolhydroperoxid, 2,5-Dimethylhexan-2,5-dihydroperoxid oder t-Butylhydroperoxid), Azoverbindungen (z.B. 4,4'-Azo-bis(4-cyanvaleriansäure), 1,1'-Azo-bis(cyclohexancarbonsäurenitril), 2,2'-Azobis(isobuttersäureamidin) dihydrochlorid, 2,2'-Azobis(isobuttersäurenitril)) oder Persulfate wie Natriumperoxodisulfat und Kaliumperoxodisulfat. Besonders bevorzugt ist 2,2'-Azo-bis(isobuttersäurenitril).

Die genannten Verbindungen sind kommerziell erhältlich bei Aldrich Chemie, D-89552 Steinheim.

Einsatzgebiete der beschriebenen Erfindung sind in erster Linie wäßrige Lacke und Druckfarben. Hier sorgt das beschriebene Verfahren für eine brillante Optik der Effektpigmente, die Metalleffektpigmente sind, bei gleichzeitig guter Haftung (Gitterschnitt, Tesatest) und mechanischer Stabilität (Steinschlagtest). Die gute Haftung der Beschichtung bleibt auch bei der Einwirkung von aggressiven Medien wie Kondenswasser erhalten (z. B. Schwitzwassertest nach DIN 50 017). Auch in Pulverlacken und Kunststoffen verbessert die Erfindung den Verbund der Pigmente mit dem umgebenden Medium und damit die mechanischen und chemischen Eigenschaften des Beschichtungssystems.

Erfindungsgemäß ist auf dem Ausgangspigment eine Schicht vorgesehen, die nebeneinander eins oder mehrere der eingangs erwähnten hydrophobierenden Alkylsilane (z. B. in der EP 0 634 459 A2 beschrieben) und wenigstens eins der hier beschriebenen reaktiven Orientierungshilfsmittel enthält. Je nach den speziellen Anforderungen an das Pigment kann der Anteil des hier beschriebenen Oberflächenmodifizierungsmittels in dieser Schicht grundsätzlich zwischen 10 % und 100 % betragen. Besonders bevorzugt ist es aber wenn der Anteil 30, 50 oder 75 % beträgt, da hierdurch eine Abstufung der wirkenden Bindungskräfte erhalten wird, die den häufigsten Anforderungen in der Praxis gerecht wird. Hierdurch wird sowohl eine verbesserte und entsprechend dem Gehalt an reaktiven Orientierungshilfsmittel stärkere Orientierung der Pigmente im Lack als auch eine verstärkte Einbindung im ausgehärteten Lackfilm erreicht.

Allgemein ist zu erwähnen, daß die mit einer Schicht aus einem reaktiven Oberflächenmodifizierungsmittel beschichteten erfindungsgemäßen Aluminiumpigmente sich deutlich leichter dispergieren lassen als beispielsweise chromatierte Aluminium-Typen (z. B. Hydrolux-Typen, Eckart-Werke). Das Dispergieren von Al-Pigmenten ist ein kritischer Schritt, da durch das Einbringen von hohen Scherenergien die Al-Flakes mechanisch geschädigt werden können. Lackfilme mit diesen geschädigten Pigmenten zeigen ein unerwünschtes "vergrautes" Aussehen (der metallische Glanz dieser Beschichtungen läßt deutlich nach).

Farben und Druckfarben, die plättchenförmige Pigmente enthalten, sind insofern problematisch in der Handhabung, als die Pigmente infolge ihrer Größe und Dichte im Vergleich zum sie umgebenden Medium sich leicht absetzen und dann zu einem festen Sedimentkuchen zusammenbacken können. Dies gilt hauptsächlich für mineralische und oxidische Effektpigmente. Die hier beschriebenen erfindungsgemäßen Pigmente setzen sich im Vergleich zum nicht beschichteten Ausgangsmaterial in einem Lack nicht so leicht als Bodensatz ab, bzw. sind nach Sedimentation deutlich leichter wieder redispergierbar.

Oberflächenmodifizierte plättchenförmige Pigmente mit verbessertem Absetz- und Aufrührverhalten wurden bereits beschrieben. In der EP 0 515 928 wird die Beschichtung von Pigmenten mit einem Polyacrylat oder Polymethacrylat bzw. deren Salzen erwähnt. Es werden keine genaueren Angaben zu den eingesetzten Polyacrylaten gemacht, so daß auch der strukturelle Aufbau der Beschichtung unbekannt ist. Diese Beschichtung trägt auch nicht zur Verbesserung der Orientierung und damit den optischen Eigenschaften der Pigmente bei; auch kann diese Beschichtung keinen Beitrag zu einer Steuerung des Benetzungsverhaltens bzw. zu einer verbesserten Haftung leisten.

In der EP 0 523 357 werden plättchenförmige Substrate beschrieben, die zur Verbesserung des Absetz- und Aufrührverhaltens mit einem Modifizierungsreagenz bestehend aus Bindemittel und faserförmigen Partikeln beschichtet sind. Die Fasern verhindern, daß sich die beschichteten Substrate auf Grund der sterischen Abstoßung aufeinanderlegen und damit eine starke Adhäsion aufeinander ausüben können. Die Fasern sind/werden jedoch nicht chemisch fest auf der Pigmentoberfläche bzw. im Bindemittelmedium verankert, so daß die Fasern sich ablösen können und die Rheologie des Lacks bzw. der Druckfarbe negativ beeinflussen können.

In der PCT WO 96/32446 werden verschiedene Epoxidgruppen aufweisende Verbindungen beschrieben, die zusammen das Absetzverhalten und auch die Bewitterung von plättchenförmigen Pigmenten verbessern sollen. Da nur gleichartige Reaktivgruppen vorhanden sind, ist ein gezielter und gerichteter Aufbau eines reaktiven Orientierungshilfsmittels auf der Pigmentoberfläche nicht möglich.

Passivierte Al-Pigmente für den Einsatz in wäßrigen Basislacken (EP 0 259 592) werden unter anderem als wäßrige Pigmentpasten hergestellt. Die Lagerstabilität solcher nach EP 0 259 592 hergestellten Pasten ist zeitlich stark limitiert, da trotz Passivierung die stark exotherme Reaktion von Wasser mit Aluminium unter Bildung von Wasserstoff nicht ganz gestoppt werden kann. Die beschriebenen modifizierten neuen Pigmenttypen auf Aluminiumbasis zeigen gegenüber passivierten chromatierten Aluminium-Typen (Hydrolux-Typen, Eckart-Werke) deutlich verlängerte Lagerstabilitäten.

Tabelle 1 vergleicht die anwendungstechnischen Eigenschaften verschiedener beschichteter Aluminiumpigmente (Feinheit D₅₀ = 18 - 20µm ) in einem handelsüblichen wäßrigen Lacksystem. Es zeigt sich deutlich, daß die SiO₂beschichtete und mit den beschriebenen Haftvermittlern oberflächenmodifizierte Pigmentqualität V2521 das Eigenschaftsprofil handelsüblicher chromatierter Typen (Hydrolux 8154, Eckart-Werke) mindestens erreicht und teilweise sogar übertrifft. Bei der Type V2421 handelt es sich um SiO₂-beschichtete Pigmente, die mit Alkylsilanen modifiziert sind, während das am Markt erhältliche PCR 8154 (Eckart-Werke) mit reinem SiO₂ beschichtet ist.

**Tabelle 1:**

| | | | |
|---|---|---|---|
| ME-Werte, Schwitzwassertest und Steinschlagtest beschichteter Aluminiumpigmente. | | | |
| Schichtaufbau: Phosphatiertes Stahlblech, KTL, Füller, handelsüblicher Wasserbasislack auf Polyurethan/Polyacrylatbasis, lK-High-Solid-Klarlack. | | | |

| Type¹ | ME-Wert² | Gitterschnitt Gtc³ | Steinschlag-test⁴ |
|---|---|---|---|
| PCR 8154 | 284 | - | - |
| Hydrolux 8 | 400 | + | + |
| 154 | | | |
| V2421 | 414 | - | - |
| V2521 | 383 | +/++ | +/++ |

| | | | |
|---|---|---|---|
| - = nicht ausreichend + = gut ++ = sehr gut ¹ Ausführliche Beschreibung im Text | | | |
| ² Messung mit Goniophotometer GP 3 (Fa. Zeiss), typische Werte | | | |
| ³ Prüfung unmittelbar nach einem Schwitzwassertest gemäß DIN 50 017. | | | |
| ⁴ 450 g Stahlkugeln (φ 3 - 5 mm) werden in einem senkrechten Rohr (6 m Länge) im freien Fall beschleunigt und treffen am Rohrende auf das wie beschrieben lackierte Blech. | | | |

### Nichterfindungsgemäßes Beispiel 1:

100 g beschichtetes Aluminiumpigment (z. B. PCR 8154, Eckart-Werke) werden in 500 ml Ethanol 10 min gerührt. Die Suspension wird unter Rühren auf 80°C erwärmt und mit einer Lösung von 2,34 g Triethylamin in 26 ml Wasser versetzt. Nach 5 weiteren Minuten wird 1 g 3-Methacryloxypropyltrimethoxysilan zu der Mischung gegeben. 30 min später werden zu der Mischung 2 g Trimethylolpropantrimethacrylat gegeben, unmittelbar gefolgt von 30 mg α,α'-Azoisobutyronitril. Der gesamte Ansatz rührt noch weitere 4 h bei 80°C. Dann läßt man die Mischung abkühlen und saugt das fertig beschichtete Pigment ab. Schließlich wird der Filterkuchen bei 90°C im Vakuum getrocknet.
Das Pigmentpulver wird in einem marktüblichen wäßrigen Bindemittelsystem appliziert. Das frisch lackierte Prüfblech wird bei 80°C im Trockenofen vorgetrocknet (10 min). Anschließend wird der Klarlack aufgebracht und die fertige Beschichtung bei 130°C eingebrannt (30 min).

### Nichterfindungsgemäßes Beispiel 2:

100 g beschichtetes Aluminiumpigment werden wie in Beispiel 1 beschrieben modifiziert. Statt 2,34 g Triethylamin werden 1,17 g Ethylendiamin verwendet.

### Nichterfindungsgemäßes Beispiel 3:

100 g eines handelsüblichen Perlglanzpigmentes (z.B. Flonac MI 11, Eckart-Werke) werden wie in Beispiel 1 beschrieben modifiziert. Als Base werden 26 ml 1 N KOH verwendet.

### Nichterfindungsgemäßes Beispiel 4:

100 g beschichtetes Aluminiumpigment werden wie in Beispiel 1 beschrieben modifiziert. Statt 1 g 3-Methacryloxypropyltrimethoxysilan wird 1 g Vinyltrimethoxysilan verwendet.

### Nichterfindungsgemäßes Beispiel 5:

100 g oxidiertes Aluminiumpigment (z. B. gemäß PCT/DE96/00890) werden in 500 ml Ethanol 10 min gerührt. Die Suspension wird unter Rühren auf 80°C erwärmt und mit einer Lösung von 2,34 g Triethylamin in 26 ml Wasser versetzt. Nach 5 weiteren Minuten werden 2 g Urethanmethacrylat-alkoxysilan (H. Wolter et al., Polymer & Materials Research Symposium 1993, Bayreuth, S. 14 - 17) zu der Mischung gegeben. 30 min später werden zu der Mischung 2 g Trimethylolpropantrimethacrylat gegeben, unmittelbar gefolgt von 50 mg α,α'-Azoisobutyronitril. Der gesamte Ansatz rührt noch weitere 6 h bei 80°C. Dann läßt man die Mischung abkühlen und saugt das fertig beschichtete Pigment ab. Schließlich wird der Filterkuchen bei 90°C im Vakuum getrocknet.
Das Pigmentpulver wird in einem marktüblichen wäßrigen Bindemittelsystem appliziert. Das frisch lackierte Prüfblech wird bei 80°C im Trockenofen vorgetrocknet (10 min). Anschließend wird der Klarlack aufgebracht und die fertige Beschichtung bei 130°C eingebrannt (30 min).

### Nichterfindungsgemäßes Beispiel 6:

Wie Beispiel 5, jedoch werden statt Urethanmethacrylat-alkoxysilan und Trimethylolpropantrimethacrylat (siehe Beispiel 5) 3 g des Adduktes von 3-Mercaptopropyltrimethoxysilan an Trimethylolpropantrimethacrylat (H. Wolter et al., Mat. Res. Soc. Symp Proc. Vol. 271, S. 719, 1992) verwendet.

### Nichterfindungsgemäßes Beispiel 7:

Wie Beispiel 6, jedoch unter Verwendung eines marktüblichen Trialkoxysilyl-substituierten Polyethylenimins.

### Nichterfindungsgemäßes Beispiel 8:

Wie Beispiel 6, aber unter Zusatz eines handelsüblichen Polyethylen/Acrylsäure-Copolymeren.

### Beispiel 9:

Wie Beispiel 1, wobei jedoch eine Mischung aus 1 g 3-Methacryloxypropyl-trimethoxysilan und 1 g Hexadecyltrimethoxisilan anstelle von 3-Methacryloxypropyltrimethoxysilan und Trimethylolpropantrimethacrylat verwendet wird.

### Nichterfindungsgemäßes Beispiel 10:

Wie Beispiel 1, jedoch unter Verwendung von 100 g eines handelsüblichen Perlglanzpigmentes (z. B. Flonac MI 11, Eckart-Werke).

## Patentansprüche

1. Mit Oberflächenmodifizierungsmitteln beschichtetes Effektpigment, das ein Metallpigment ist,
**dadurch gekennzeichnet,**
**daß** das Ausgangspigment eine Schicht mit wenigstens einem reaktiven Oberflächenmodifizierungsmittel aufweist, wobei das Oberflächenmodifizierungsmittel eine Verbindung ist, die wenigstens zwei voneinander verschiedene und durch einen Spacer beabstandete, endständige funktionelle Gruppen aufweist, von denen wenigstens eine erste funktionelle Gruppe chemisch an das Ausgangspigment gebunden ist, und von denen wenigstens eine zweite funktionelle Gruppe mit einem umgebenden Bindemittel-Medium eines wässrigen Lacks oder einer wässrigen Druckfarbe chemisch in einer Art Vernetzungsreaktion reagieren kann, und das Metallpigment weiterhin eine Teilchengröße zwischen 1 und 200 µm besitzt und das Verhalten eines no n-leafing Pigments zeigt, wobei das Metallpigment mit einer Schicht aus einem oder mehreren Metalloxid(en) aus der Gruppe Siliciumdioxid, Titandioxid, Aluminiumoxid, Zinnoxid, Zinkoxid und/oder Eisenoxid belegt ist, wobei neben dem reaktiven Oberflächenmodifizierungsmittel ein Alkylsilan in derselben Schicht vorliegt.

2. Metallpigment nach Anspruch 1,
**dadurch gekennzeichnet,**
**daß** das Oberflächenmodifizierungsmittel in monomerer oder polymerer Form vorliegt.

3. Metallpigment nach Anspruch 1 oder 2,
**dadurch gekennzeichnet,**
**daß** das Oberflächenmodifizierungsmittel über eine Reaktion der wenigstens einen ersten funktionellen Gruppe aus (RO)₃Si-, (RO)₂RSi-, R_{(3-z)}X_{z}Si-, O=P(OR)ₓ(OH)_{y}-O_{w}-, worin innerhalb einer funktionellen Gruppe R gleich oder unterschiedlich sein kann und jeweils CₙHₘ darstellt, wobei n = 1 - 30, m = 3 - 61, z = 1 - 3 und worin X = Cl, Br sowie x = 0 - 2, y = 0 - 2 und x + y = 2 und w = 0 oder 1, chemisch an das Ausgangspigment gebunden ist.

4. Metallpigment nach einem der Ansprüche 1 bis 3,
**dadurch gekennzeichnet,**
**daß** der Spacer aus Alkylketten, Silanen, Siloxanen, Polyethern, Thioethern oder Urethanen bzw. Kombinationen dieser Gruppierungen mit der allgemeinen Formel (C,Si)ₙHₘ(N,O,S)ₓ mit n = 1 - 50, m = 2 - 100 und x = 0 - 50 besteht.

5. Metallpigment nach einem der Ansprüche 1 bis 4,
**dadurch gekennzeichnet,**
**daß** es sich bei der wenigstens einen zweiten funktionellen Gruppe um ein Acrylat, Methacrylat, Isocyanat, eine Vinylverbindung, Aminogruppe, Cyanogruppe, Epoxygruppe oder Hydroxygruppe handelt.

6. Metallpigment nach einem der Ansprüche 1 bis 5,
**dadurch gekennzeichnet,**
**daß** das Metallpigment aus der Gruppe Aluminium, Kupfer, Zink, Goldbronze, Titan, Zirkonium, Zinn, Eisen, Stahl und/oder Legierungen von diesen oder Mischungen hiervon ausgewählt ist.

7. Metallpigment nach einem der vorhergehenden Ansprüche,
**dadurch gekennzeichnet,**
**daß** das reaktive Oberflächenmodifizierungsmittel in der Schicht in einem Anteil zwischen 10 und 100 % enthalten ist, wobei Anteile von 30, 50 oder 75 % bevorzugt sind.

8. Verfahren zur Herstellung eines mit Oberflächenmodifizierungsmitteln beschichteten Effektpigments, das ein Metallpigment ist, wobei das Ausgangspigment eine Schicht mit wenigstens einem reaktiven Oberflächenmodifizierungsmittel aufweist, wobei das Oberflächenmodifizierungsmittel eine Verbindung ist, die wenigstens zwei voneinander verschiedene und durch einen Spacer beabstandete, endständige funktionelle Gruppen aufweist, von denen wenigstens eine erste funktionelle Gruppe chemisch an das Ausgangspigment gebunden ist, und von denen wenigstens eine zweite funktionelle Gruppe mit einem umgebenden Bindemittel-Medium chemisch in einer Art Vernetzungsreaktion reagieren kann, und das Effektpigment weiterhin eine Teilchengröße zwischen 1 und 200 µm besitzt und das Verhalten eines non-leafing Pigments zeigt, wobei neben dem reaktiven Oberflächenmodifizierungsmittel ein Alkylsilan in derselben Schicht vorliegt, wobei das Ausgangspigment in einem organischen Lösungsmittel gerührt und erwärmt wird, mit einer Lösung einer Base in Wasser oder in einem anderen Lösungsmittel versetzt wird, das Oberflächenmodifizierungsmittel zugegeben und nach 15 Minuten bis 24 Stunden abgekühlt und abgesaugt wird und der erhaltene Filterkuchen dann bei ca. 60 bis 130 °C im Vakuum getrocknet wird.

9. Verfahren zur Herstellung eines mit Oberflächenmodifizierungsmitteln beschichteten Effektpigments, das ein Metallpigment ist, wobei das Ausgangspigment eine Schicht mit wenigstens einem reaktiven Oberflächenmodifizierungsmittel aufweist, wobei das Oberflächenmodifizierungsmittel eine Verbindung ist, die wenigstens zwei voneinander verschiedene und durch einen Spacer beabstandete, endständige funktionelle Gruppen aufweist, von denen wenigstens eine erste funktionelle Gruppe chemisch in einem organischen Lösungsmittel, versetzt mit einer Lösung einer Base in Wasser oder einem anderen Lösungsmittel, an das Ausgangspigment gebunden wurde, und von denen wenigstens eine zweite funktionelle Gruppe mit einem umgebenden Bindemittel-Medium chemisch in einer Art Vernetzungsreaktion reagieren kann, und das Effektpigment weiterhin eine Teilchengröße zwischen 1 und 200 µm besitzt und das Verhalten eines non-leafing Pigments zeigt, wobei neben dem reaktions Oberflächenmodifizierungsmittel ein Alkylsilan in derselben Schicht vorliegt, wobei das Oberflächenmodifizierungsmittel durch chemische Reaktion aus geeigneten Komponenten direkt auf der Oberfläche des Ausgangspigments erzeugt wird.

10. Verfahren nach Anspruch 8 oder 9,
**dadurch gekennzeichnet,**
**daß** das Oberflächenmodifizierungsmittel in monomerer oder polymerer Form vorliegt.

11. Verfahren nach einem der Ansprüche 8 bis 10,
**dadurch gekennzeichnet,**
**daß** das Oberflächenmodifizierungsmittel über eine Reaktion der wenigste ns einen ersten funktionellen Gruppe aus (RO)₃Si-, (RO)₂RSi-, R_{(3-z)}X_{z}Si-, O=P(OR)ₓ(OH)_{y}-O_{w}-, worin innerhalb einer funktionellen Gruppe R gleich oder unterschiedlich sein kann und jeweils CₙHₘ darstellt, wobei n = 1 - 30, m = 3 - 61, z = 1 - 3 und worin X = Cl, Br sowie x = 0 - 2, y = 0 - 2 und x + y = 2 und w = 0 oder 1, chemisch an das Ausgangspigment gebunden ist.

12. Verfahren nach einem der Ansprüche 8 bis 11,
**dadurch gekennzeichnet,**
**daß** der Spacer aus Alkylketten, Silanen, Siloxanen, Polyethern, Thioethern oder Urethanen bzw. Kombinationen dieser Gruppierungen mit der allgemeinen Formel (C,Si)ₙHₘ(N,O,S)ₓ mit n = 1 - 50, m = 2 - 100 und x = 0 - 50 besteht.

13. Verfahren nach einem der Ansprüche 8 bis 12,
**dadurch gekennzeichnet,**
**daß** es sich bei der wenigstens einen zweiten funktionellen Gruppe um ein Acrylat, Methacrylat, Isocyanat, eine Vinylverbindung, Aminogruppe, Cyanogruppe, Epoxygruppe oder Hydroxygruppe handelt.

14. Verfahren nach einem der Ansprüche 8 bis 13,
**dadurch gekennzeichnet,**
**daß** das Effektpigment aus der Gruppe Aluminium, Kupfer, Zink, Goldbronze, Titan, Zirkonium, Zinn, Eisen, Stahl und/oder Legierungen von diesen oder Mischungen hiervon ausgewählt ist.

15. Verfahren nach einem der Ansprüche 8 bis 14,
**dadurch gekennzeichnet,**
**daß** das Effektpigment mit einer Schicht aus einem oder mehreren Metalloxid(en) aus der Gruppe Siliciumdioxid, Titandioxid, Aluminiumoxid, Zinnoxid, Zinkoxid, Eisenoxid und/oder organischen Polymeren, wie Acrylat, Methacrylat, belegt ist.

16. Verfahren nach einem der Ansprüche 8 bis 15,
**dadurch gekennzeichnet,**
**daß** das reaktive Oberflächenmodifizierungsmittel in der Schicht in einem Anteil zwischen 10 und 100 % enthalten ist, wobei Anteile von 30, 50 oder 75 % bevorzugt sind.

17. Verwendung eines mit Orientierungshilfsmitteln beschichteten Metallpigments nach einem der Ansprüche 1 bis 7 zur Herstellung von Farben, Druckfarben, Lacken, Beschichtungen und Kunststoffen, zur Einfärbung von Keramiken sowie in kosmetischen Zubereitungen und Schreib-, Mal- und Zeichenstiften.

## Claims

1. Effect pigment coated with surface modifiers, which effect pigment is a metal pigment, **characterized in that** the starting pigment has a layer comprising at least one reactive surface modifier, the surface modifier being a compound containing at least two terminal functional groups, different from one another and distanced by a spacer, of which at least one first functional group is attached chemically to the starting pigment, and of which at least one second functional group is capable of reacting chemically with a surrounding binder medium of aqueous coating of an aqueous printing ink in a kind of crosslinking reaction, and the metal pigment further possesses a particle size of between 1 and 200 µm and exhibits the behaviour of a non-leafing pigment, the metal pigment being covered with a layer of one or more metal oxides from the group consisting of silicon dioxide, titanium dioxide, aluminium oxide, tin oxide, zinc oxide and/or iron oxide, wherein besides the reactive surface modifier an alkylsilane is present in the same layer.

2. Metal pigment according to Claim 1, **characterized in that** the surface modifier is in monomeric or polymeric form.

3. Metal pigment according to Claim 1 or 2, **characterized in that** the surface modifier is attached chemically to the starting pigment by reaction of the at least one first functional group comprising (RO)₃Si-, (RO)₂RSi-, R_{(3-z)}X_{z}Si-, O=P(OR)ₓ(OH)_{y}-O_{w}-, in which within one functional group R may be identical or different and is in each case CₙHₘ, where n = 1 - 30, m = 3 - 61 and z = 1 - 3, and in which X = Cl or Br and also x = 0 - 2, y = 0 - 2 and x + y = 2 and w = 0 or 1.

4. Metal pigment according to one of Claims 1 to 3, **characterized in that** the spacer is composed of alkyl chains, silanes, siloxanes, polyethers, thioethers or urethanes and/or combinations of these groups having the general formula (C,Si)ₙHₘ(N,O,S)ₓ where n = 1 - 50, m = 2 - 100 and x = 0 - 50.

5. Metal pigment according to one of Claims 1 to 4, **characterized in that** the at least one second functional group comprises an acrylate, methacrylate, isocyanate, a vinyl compound, amino group, cyano group, epoxy group or hydroxyl group.

6. Metal pigment according to one of Claims 1 to 5, **characterized in that** the metal pigment is selected from the group consisting of aluminium, copper, zinc, gold bronze, titanium, zirconium, tin, iron, steel and/or alloys of these or mixtures thereof.

7. Metal pigment according to any of the preceding claims, **characterized in that** the reactive surface modifier is present in the layer in a fraction of between 10 and 100%, fractions of 30, 50 or 75% being preferred.

8. Process for preparing an effect pigment coated with surface modifiers, which effect pigment is a metal pigment, wherein the starting pigment has a layer comprising at least one reactive surface modifier, the surface modifier being a compound containing at least two terminal functional groups, different from one another and distanced by a spacer, of which at least one first functional group is attached chemically to the starting pigment, and of which at least one second functional group is capable of reacting chemically with a surrounding binder medium in a kind of crosslinking reaction, and the effect pigment further possesses a particle size of between 1 and 200 µm and exhibits the behaviour of a non-leafing pigment, wherein besides the reactive surface modifier an alkylsilane is present in the same layer, wherein the starting pigment is stirred in an organic solvent and heated, admixed with a solution of a base in water or in another solvent, the surface modifier is added, and after from 15 minutes to 24 hours the mixture is cooled and filtered with suction and the resulting filtercake is then dried in vacuo at from about 60 to 130°C.

9. Process for preparing an effect pigment coated with surface modifiers, which effect pigment is a metal pigment, wherein the starting pigment has a layer comprising at least one reactive surface modifier, the surface modifier being a compound containing at least two terminal functional groups, different from one another and distanced by a spacer, of which at least one first functional group was attached chemically to the starting pigment in an organic solvent admixed with a solution of a base in water or another solvent, and of which at least one second functional group is capable of reacting chemically with a surrounding binder medium in a kind of crosslinking reaction, and the effect pigment further possesses a particle size of between 1 and 200 µm and exhibits the behaviour of a non-leafing pigment, wherein besides the reactive surface modifier an alkylsilane is present in the same layer, wherein the surface modifier is generated directly on the surface of the starting pigment from appropriate components by chemical reaction.

10. Process according to Claim 8 or 9, **characterized in that** the surface modifier is present in monomeric or polymeric form.

11. Process according to one of Claims 8 to 10, **characterized in that** the surface modifier is attached chemically to the starting pigment by reaction of the at least one first functional group comprising (RO)₃Si-, (RO)₂RSi-, R_{(3-z)}X_{z}Si-, O=P(OR)ₓ(OH)_{y}-O_{w}-, in which within one functional group R may be identical or different and is in each case CₙHₘ, where n = 1 - 30, m = 3 - 61 and z = 1 - 3, and in which X = Cl or Br and also x = 0 - 2, y = 0 - 2 and x + y = 2 and w = 0 or 1.

12. Process according to one of Claims 8 to 11, **characterized in that** the spacer is composed of alkyl chains, silanes, siloxanes, polyethers, thioethers or urethanes and/or combinations of these groups having the general formula (C,Si)ₙHₘ(N,O,S)ₓ where n = 1 - 50, m = 2 - 100 and x = 0 - 50.

13. Process according to one of Claims 8 to 12, **characterized in that** the at least one second functional group comprises an acrylate, methacrylate, isocyanate, a vinyl compound, amino group, cyano group, epoxy group or hydroxyl group.

14. Process according to one of Claims 8 to 13, **characterized in that** the effect pigment is selected from the group consisting of aluminium, copper, zinc, gold bronze, titanium, zirconium, tin, iron, steel and/or alloys of these or mixtures thereof.

15. Process according to one of Claims 8 to 14, **characterized in that** the effect pigment is covered with a layer of one or more metal oxides from the group consisting of silicon dioxide, titanium dioxide, aluminium oxide, tin oxide, zinc oxide, iron oxide and/or organic polymers, such as acrylate, methacrylate.

16. Process according to one of Claims 8 to 15, **characterized in that** the reactive surface modifier is present in the layer in a fraction of between 10 and 100%, fractions of 30, 50 or 75% being preferred.

17. Use of a metal pigment coated with orientation aids, according to one of Claims 1 to 7, for producing paints, printing inks, varnishes, coatings and plastics, for colouring ceramics, and also in cosmetic preparations and writing, painting and drawing implements.

## Revendications

1. Pigment à effet recouvert d'un agent modificateur de surface, qui est un pigment métallique, **caractérisé en ce que** le pigment de départ présente une couche comportant au moins un agent modificateur de surface réactif, l'agent modificateur de surface consistant en un composé qui présente au moins deux groupes fonctionnels terminaux différents l'un de l'autre et écartés par un agent d'espacement, dont au moins un premier groupe fonctionnel est fixé chimiquement au pigment de départ, et dont au moins un second groupe fonctionnel peut réagir chimiquement avec un agent liant environnant d'une laque aqueuse ou d'une couleur d'impression aqueuse dans une réaction de réticulation, et le pigment métallique présente également une taille de particule comprise entre 1 et 200 µm et montre le comportement d'un pigment non-leafing, le pigment métallique étant occupé avec une couche à base d'un ou de plusieurs oxyde(s) métallique(s) choisi(s) dans le groupe dioxyde de silicium, dioxyde de titane, oxyde d'aluminium, oxyde d'étain, oxyde de zinc et/ou oxyde de fer, un alkylsilane étant présent dans la même couche à côté de l'agent modificateur de surface réactif.

2. Pigment métallique selon la revendication 1, **caractérisé en ce que** l'agent modificateur de surface se présente sous forme monomère ou polymère.

3. Pigment métallique selon la revendication 1 ou 2, **caractérisé en ce que** l'agent modificateur de surface est fixé chimiquement au pigment de départ par une réaction du au moins un premier groupe fonctionnel à base de (RO)₃Si-, (RO)₂RSi-, R_{(3-z)}X_{z}Si-, O=P(OR)ₓ(OH)_{y}-O_{w}-, groupe dans lequel R peut être identique ou différent à l'intérieur d'un groupe fonctionnel et représente à chaque fois CₙHₘ, dans laquelle n = 1 - 30, m = 3 - 61, z = 1 - 3 et X = Cl, Br ainsi que x = 0 - 2, y = 0 - 2 et x + y = 2 et w = 0 ou 1.

4. Pigment métallique selon l'une quelconque des revendications 1 à 3, **caractérisé en ce que** l'agent d'espacement consiste en des chaînes alkylées, des silanes, des siloxanes, des polyéthers, des thioéthers ou des uréthanes, ou en des combinaisons de ces groupes ayant la formule générale (C, Si)ₙHₘ(N, O, S)ₓ, dans laquelle n = 1 - 50, m = 2 - 100 et x = 0-50.

5. Pigment métallique selon l'une des revendications 1 à 4, **caractérisé en ce que**, en ce qui concerne le au moins un second groupe fonctionnel, il s'agit d'un acrylate, méthacrylate, isocyanate, d'un composé vinylique, un groupe amino, un groupe cyano, un groupe époxy ou un groupe hydroxy.

6. Pigment métallique selon l'une des revendications 1 à 5, **caractérisé en ce que** le pigment métallique est choisi dans le groupe constitué par l'aluminium, le cuivre, le zinc, le bronze doré, le titane, le zirconium, l'étain, le fer, l'acier et/ou des alliages des précédents ou des mélanges de ceux-ci.

7. Pigment métallique selon l'une quelconque des revendications précédentes, **caractérisé en ce que en ce que** l'agent modificateur de surface réactif est présent dans la couche dans une proportion allant de 10 à 100%, , des proportions de 30, 50 ou 75% étant préférées.

8. Procédé pour la préparation d'un pigment à effet recouvert d'agents modificateurs de surface, lequel est un pigment métallique, le pigment de départ présentant une couche comportant au moins un agent modificateur de surface réactif, l'agent modificateur de surface consistant en un composé qui présente au moins deux groupes fonctionnels terminaux différents l'un de l'autre et écartés par un agent d'espacement, dont au moins un premier groupe fonctionnel est fixé chimiquement au pigment de départ, et dont au moins un second groupe fonctionnel peut réagir chimiquement avec un agent liant environnant dans une sorte de réaction de réticulation, et le pigment à effet présentant également une taille de particule comprise entre 1 et 200 µm et montrant le comportement d'un pigment non-leafing, un alkylsilane étant présent dans la même couche à côté de l'agent modificateur de surface réactif, le pigment de départ étant remué et réchauffé dans un solvant organique, mélangé avec une solution d'une base dans de l'eau ou dans un autre solvant, l'agent modificateur de surface étant ajouté et refroidi et aspiré après 15 minutes jusqu'à 24 heures et le gâteau de filtre-presse obtenu étant séché ensuite à environ 60 jusqu'à 130°C dans le vide.

9. Procédé pour la préparation d'un pigment à effet recouvert d'agents modificateurs de surface, lequel est un pigment métallique, le pigment de départ présentant une couche comportant au moins un agent modificateur de surface réactif, l'agent modificateur de surface consistant en un composé qui présente au moins deux groupes fonctionnels terminaux différents l'un de l'autre et écartés par un agent d'espacement, dont au moins un premier groupe fonctionnel a été fixé chimiquement au pigment de départ dans un solvant organique, mélangé avec une solution d'une base dans de l'eau ou un autre solvant, et dont au moins un second groupe fonctionnel peut réagir chimiquement avec un agent liant environnant dans une sorte de réaction de réticulation, et le pigment à effet présente également une taille de particule comprise entre 1 et 200 µm et montre le comportement d'un pigment non-leafing, un alkylsilane étant présent dans la même couche à côté de l'agent modificateur de surface réactif, l'agent modificateur de surface étant généré par réaction chimique à partir de composants appropriés directement sur la surface du pigment de départ.

10. Procédé selon la revendication 8 ou 9, **caractérisé en ce que** l'agent modificateur de surface se présente sous forme monomère ou polymère.

11. Procédé selon l'une quelconque des revendications 8 à 10, **caractérisé en ce que** l'agent modificateur de surface est fixé chimiquement au pigment de départ par une réaction du au moins un premier groupe fonctionnel à base de (RO)₃Si-, (RO)₂RSi-, R_{(3-z)}X_{z}Si-, O=P(OR)ₓ(OH)_{y}-O_{w}-, groupe dans lequel R peut être identique ou différent à l'intérieur d'un groupe fonctionnel et représente à chaque fois CₙHₘ, dans laquelle n = 1 - 30, m = 3 - 61, z = 1 - 3 et X = Cl, Br ainsi que x = 0 - 2, y = 0 - 2 et x + y = 2 et w = 0 ou 1.

12. Procédé selon l'une quelconque des revendications 8 à 11, **caractérisé en ce que** l'agent d'espacement consiste en des chaînes alkylées, des silanes, des siloxanes, des polyéthers, des thioéthers ou des uréthanes, ou en des combinaisons de ces groupes ayant la formule générale (C, Si)ₙHₘ(N, O, S)ₓ, dans laquelle n = 1 - 50, m = 2 - 100 et x = 0 - 50.

13. Procédé selon l'une quelconque des revendications 8 à 12, **caractérisé en ce que**, en ce qui concerne le au moins un second groupe fonctionnel, il s'agit d'un acrylate, méthacrylate, isocyanate, d'un composé vinylique, un groupe amino, un groupe cyano, un groupe époxy ou un groupe hydroxy.

14. Procédé selon l'une des revendications 8 à 13, **caractérisé en ce que** le pigment à effet est choisi dans le groupe constitué par l'aluminium, le cuivre, le zinc, le bronze doré, le titane, le zirconium, l'étain, le fer, l'acier et/ou des alliages des précédents ou des mélanges de ceux-ci.

15. Procédé selon l'une quelconque des revendications 8 à 14, **caractérisé en ce que** le pigment à effet est occupé avec une couche à base d'un ou de plusieurs oxyde(s) métallique(s) choisi(s) dans le groupe dioxyde de silicium, dioxyde de titane, oxyde d'aluminium, oxyde d'étain, oxyde de zinc, oxyde de fer et/ou polymères organiques, tels que acrylate, méthacrylate.

16. Procédé selon l'une quelconque des revendications 8 à 15, **caractérisé en ce que** l'agent modificateur de surface réactif est présent dans la couche dans une proportion allant de 10 à 100%, des proportions de 30, 50 ou 75% étant préférées.

17. Utilisation d'un pigment métallique recouvert d'adjuvants d'orientation selon l'une quelconque des revendications 1 à 7 en vue de la préparation de colorants, d'agents d'impression, de laques, de recouvrements et de matières synthétiques, en vue de la coloration de céramiques ainsi que dans des préparations cosmétiques et des instruments pour l'écriture, la peinture et le dessin.
